# EUROPEAN PATENT APPLICATION

(11) **EP 3 145 221 A1**
(43) Date of publication of application: **22.03.2017**
(21) Application number: 15306417.5
(22) Date of filing: 16.09.2015
(51) Int. Cl.: H04W 4/00, H04W 40/24, H04W 40/34, H04W 68/02, H04L 12/721

(54) **METHODS, APPARATUSES, MOBILE COMMUNICATION SYSTEM AND COMPUTER PROGRAMS FOR UPDATING FORWARDING INFORMATION**

(71) Applicant: ALCATEL LUCENT, 92100 Boulogne-Billancourt (FR)
(72) Inventor: Zeller, Dietrich, 70435 Stuttgart (DE); Bakker, Hajo, 70435 Stuttgart (DE)
(74) Representative: 2SPL Patentanwälte PartG mbB

(57) **Abstract**

Embodiments relate to methods, apparatuses, a mobile communication system and computer programs for updating forwarding information. At least some embodiments provide a method for updating forwarding information within a subset of a plurality of infrastructure entities (100) of a mobile communication system (300). The forwarding information indicates a route for user data traversing the subset of infrastructure entities to the mobile transceiver (200). The method comprises obtaining (12) a paging request for the mobile transceiver (200). The method further comprises providing (14) information on a location for the mobile transceiver (200) based on the paging request. The method further comprises forwarding (16) the information on the location to the plurality of infrastructure entities (100) along an updated route. The method further comprises updating (18) the forwarding information within the subset of infrastructure entities according to the updated route.

## Description

### Technical Field

Embodiments relate to methods, apparatuses, a mobile communication system and computer programs for updating forwarding information, more particularly, but not exclusively, based on a paging request.

### Background

This section introduces aspects that may be helpful in facilitating a better understanding of the invention(s). Accordingly, the statements of this section are to be read in this light and are not to be understood as admissions about what is in the prior art or what is not in the prior art.

Demands for increasing the throughput of communication systems are steadily increasing. As connected devices, such as smartphones, computers, or streaming devices increase the amount of data transmitted due to a more widespread use and due to demand for more high quality services, a new category of devices is using an increasing share of the available bandwidth.

The Internet of Things (IoT), which predominantly relies on Machine-to-Machine (M2M) communication, connects formerly unconnected devices, such as thermostats, household appliances, bio monitors etc. to communication systems, e.g. mobile communication systems.

As such appliances partaking in M2M communication may be located in remote areas or may be mobile, they may also use mobile communication systems, e.g. General Packet Radio Service (GPRS), Universal Mobile Telecommunications System (UMTS), Long Term Evolution (LTE) or 5^{th}-generation mobile communication systems (5G). As, in many cases, no high quality content might be exchanged in M2M, but sparse data, such as instructions, sensory readings etc., data packets sent in M2M may comprise a small size, compared with data packets sent or received by smart phones or streaming clients, which may result in a high overhead for establishing connections or bearers for transferring the data.

In conventional mobile communication systems, e.g. LTE or UMTS mobile communication systems, to exchange data or route calls, a dedicated bearer is established between a mobile transceiver (e.g. a M2M node) and the core network. If e.g. a single packet is received for a mobile transceiver, as might be the case in M2M communications, and the mobile transceiver is not actively connected to a base station transceiver (idle), in many conventional mobile communication system, the mobile transceiver has to be paged, has to respond, a bearer is setup and modified, and only then the single packet might be transferred.

More information can be found in:
EP14306932.6, Dietrich Zeller, Hajo-Erich Bakker, Uwe Dötsch, and Mark Doll, Method and Device for a Connectionless Bearer Service, 12/01/2014.

### Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide methods, apparatuses, a mobile communication system and computer programs for updating forwarding information, more particularly, but not exclusively, based on a paging request. In a mobile communication system, whereabouts of mobile transceivers, while not actively connected or associated with a base station, may be unknown. A Mobility Management Entity (MME) may know the last association of the mobile transceiver with a base station, and therefore deduce a probable location or region, but, if a call or data packet for a mobile transceiver arrives, the MME may have to locate the mobile transceiver to provide the call or data packet. A preferred method for locating the mobile transceiver is called paging. In paging, the MME sends paging requests to base stations the mobile transceiver might camp on, e.g. in a registration area that is based on the last cell the mobile transceiver has been connected to. The base station forward (and repeat) the paging requests, e.g. until the mobile transceiver registers the paging requests and associates with the base station transceiver or a timeout occurs. In conventional mobile communication systems, the mobile transceiver then establishes a connection (a bearer), to receive the call or data packet. In embodiments, the paging request may indicate whether a connection establishment is required, or whether an update of routing information suffices. In this case the communication may continue in a connectionless packet switched way. In embodiments, the mobile transceiver determines its location (e.g. by associating with a base station), and forwards the location along a plurality of infrastructure entities, which update their forwarding entries for that mobile transceiver based on the new location. If a connection establishment is required, the mobile transceiver may subsequently or concurrently establish a connection via the plurality of infrastructure entities.

Embodiments provide a method for updating forwarding information within a subset of a plurality of infrastructure entities 100 of a mobile communication system 300. The forwarding information indicates a route for user data traversing the subset of infrastructure entities to the mobile transceiver. The method comprises obtaining a paging request for the mobile transceiver. The method further comprises providing information on a location for the mobile transceiver based on the paging request. The method further comprises forwarding the information on the location to the plurality of infrastructure entities along an updated route. The method further comprises updating the forwarding information within the subset of infrastructure entities according to the updated route. Embodiments may provide updated forwarding information related to a mobile transceiver that may enable a lower-overhead connectionless data routing paradigm, e.g. no explicit connection establishment may be required for transmitting small or sparse amounts of data, as often occurs in machine-to-machine communication. Embodiments may lower an overhead by enabling paging without a subsequent connection establishment. Forwarding the information on the location along the new route may enable an update without an additional involvement of the MME.

In at least some embodiments, the paging request may comprise decision information on whether the mobile transceiver is to update the path information or establish a connection. The method may further comprise establishing a connection along the updated route if the decision information indicates that a connection is to be established. Establishing a connection if required may enable hybrid connectionless and connection-oriented data transmissions in a mobile communication system, which may choose to use connectionless or connection-oriented data transmissions based on a nature or amount of data.

In at least some embodiments, the method may further comprise transmitting user data along the route to the mobile transceiver. The method may further comprise obtaining information related to a path error based on the transmitting. The method may further comprise paging the mobile transceiver based on the information related to the path error. The paging request may be based on the paging. Paging the mobile transceiver based on a path error may further enable connectionless data transmissions by handling the path error and updating the route to the mobile transceiver for the user data and/or subsequent user data.

In at least some embodiments, the paging may be triggered by an infrastructure entity of the subset of infrastructure entities. Triggering a paging by an infrastructure entity, e.g. any infrastructure entity determining or receiving a path error, may reduce an overhead, e.g. at a serving gateway, .e.g., the infrastructure entity may directly trigger the paging at the mobility management entity, e.g. without being constrained to trigger the paging via an infrastructure entity having an established connection with the mobility management entity. In various embodiments, the paging may be based on the route for the user data. Paging based on the route may reduce a number of base stations paging the mobile transceiver by selecting base stations in a region or area the mobile transceiver is likely to be in, which may reduce an overhead for the other base stations.

In various embodiments, the information related to the path error may indicate an absence of valid forwarding information at an infrastructure entity of the subset of infrastructure entities. The path error may e.g. be used to trigger the paging to update the forwarding information.

In at least some embodiments, the method may further comprise transmitting the user data along the updated route to the mobile transceiver. Transmitting the user data along the updated route may complete the handling of the path error and may avoid re-transmissions.

In various embodiments, the subset of infrastructure entities may comprise a routing hierarchy. An infrastructure entity of the subset of infrastructure entities comprising an interface to other communication systems may correspond to the top of the routing hierarchy. The forwarding may correspond to forwarding the information on the location along the hierarchy towards the top of the hierarchy. Forwarding the information on the location along the hierarchy may update the forwarding information in the infrastructure nodes used in the reverse direction for transmitting user data to the mobile transceiver, and may enable updating the forwarding information without an additional involvement of a coordinating entity, e.g. a mobility management entity.

Embodiments further provide a further method for updating forwarding information for a mobile transceiver in an infrastructure entity of a plurality of infrastructure entities of a mobile communication system. The method comprises obtaining information on a location of the mobile transceiver. The information on the location of the mobile transceiver is based on a paging request for the mobile transceiver. The method further comprises updating the forwarding information for the mobile transceiver based on the information on the location of the mobile transceiver. The method further comprises forwarding the information on the location. At least some embodiments of the method may enable a lower-overhead connectionless data routing paradigm, e.g. no two-sided connection establishment may be required for transmitting small or sparse amounts of data, as often occurs in machine-to-machine communication. Forwarding the information on the location along the new route may enable an update without an additional involvement of the MME.

In at least some embodiments, the plurality of infrastructure entities may comprise a routing hierarchy. An infrastructure entity of the plurality of infrastructure entities comprising an interface to other communication systems may correspond to the top of the routing hierarchy. The forwarding may correspond to forwarding the information on the location along the hierarchy towards the top of the hierarchy. Forwarding the information on the location along the hierarchy may correspond to forwarding the information on the location along a reverse route user data for the mobile transceiver is routed on. The updating may be based on an infrastructure entity of the plurality of infrastructure entities lower in the routing hierarchy, from which the information on the location is obtained. Updating based on the infrastructure entity lower in the routing hierarchy may enable a low-complexity routing, e.g. by providing forwarding information based on an output port or forwarding used for forwarding, which may reduce a forwarding complexity.

Embodiments further provide a method for a mobile transceiver in a mobile communication system. The mobile communication system further comprises a plurality of infrastructure entities. The method comprises obtaining a paging request for the mobile transceiver. The paging request comprises decision information on whether the mobile transceiver is to update the path information or to establish a connection. The method further comprises providing information on a location of the mobile transceiver based on the paging request. The information related to the location corresponds to an association request of the mobile transceiver to a base station transceiver comprised in the plurality of infrastructure nodes. The location of the mobile transceiver is based on the base station transceiver. At least some embodiments of the method may enable a lower-overhead connectionless data routing paradigm, e.g. no two-sided connection establishment may be required for transmitting small or sparse amounts of data, as often occurs in machine-to-machine communication. Providing the information on the location along the new route may enable an update without an additional involvement of the MME.

In at least some embodiments, the method for the mobile transceiver may further comprise establishing a connection via at least a subset of the plurality of infrastructure nodes if the decision information indicates that a connection is to be established. Establishing a connection if required may enable hybrid connectionless and connection-oriented data transmissions in a mobile communication system, which may choose connectionless or connection-oriented data transmissions based on a nature or amount of data.

Embodiments further provide a mobile communication system. The mobile communication system comprises a plurality of infrastructure entities and a mobile transceiver. The mobile transceiver is configured to obtain a paging request for the mobile transceiver. The mobile transceiver is further configured to provide information on a location for the mobile transceiver based on the paging request. The plurality of infrastructure entities is configured to forward the information on the location within the plurality of infrastructure entities along an updated route. The plurality of infrastructure entities is further configured to update the forwarding information within a subset of infrastructure entities according to the updated route. The forwarding information indicates a route for user data traversing the subset of infrastructure entities to the mobile transceiver.

Embodiments further provide an apparatus for updating forwarding information for a mobile transceiver in an infrastructure entity of a plurality of infrastructure entities of a mobile communication system. The apparatus comprises an input configured to obtain information on a location of the mobile transceiver. The information on the location of the mobile transceiver is based on a paging request for the mobile transceiver. The apparatus further comprises a control module configured to update the forwarding information for the mobile transceiver based on the information on the location of the mobile transceiver. The apparatus further comprises an output configured to forward the information on the location.

Embodiments further provide an apparatus for a mobile transceiver in a mobile communication system. The mobile communication system further comprises a plurality of infrastructure entities. The apparatus comprises an input configured to obtain a paging request for the mobile transceiver. The paging request comprises decision information on whether the mobile transceiver is to update the path information or to establish a connection. The apparatus further comprises a control module configured to provide information on a location of the mobile transceiver via an output based on the paging request. The information related to the location corresponds to an association request of the mobile transceiver to a base station transceiver comprised in the plurality of infrastructure nodes. The location of the mobile transceiver is based on the base station transceiver.

A further embodiment is a computer program product comprising a computer readable medium having computer readable program code embodied therein, the computer readable program code being configured to implement one of the above methods when being loaded on a computer, a processor, or a programmable hardware component.

Embodiments further provide a computer program having a program code for performing the above method, when the computer program is executed on a computer, a processor, or a programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
- Fig. 1: illustrates a flow chart of an embodiment of a method for updating forwarding information;
- Fig. 1a: illustrates a flow chart of an extended embodiment of a method for updating forwarding information;
- Fig. 2: illustrates an embodiment of user plane control messaging for a connectionless service;
- Fig. 3a: shows an exemplary sequence of actions of embodiments to reestablish valid forwarding entries;
- Fig. 3b: illustrates a sequence of actions of embodiments triggered by a downstream node not directly connected to a mobility management controller to reestablish valid forwarding entries for a connectionless bearer;
- Fig. 3c: illustrates a sequence of actions of embodiments applicable for Hybrid Bearers, where the network decide to set up connection oriented bearers;
- Fig. 4: illustrates a flow chart of an embodiment of a method for updating forwarding information for a mobile transceiver in an infrastructure entity;
- Fig. 5: illustrates a flow chart of an embodiment of a method for a mobile transceiver in a mobile communication system;
- Fig. 6: illustrates a block diagram of an embodiment of a mobile communication system;
- Fig. 7: illustrates a block diagram of an embodiment of an apparatus for updating forwarding information for a mobile transceiver in an infrastructure entity; and
- Fig. 8: illustrates a block diagram of an embodiment of an apparatus for a mobile transceiver.

### Description of Embodiments

Various example embodiments will now be described more fully with reference to the accompanying drawings in which some example embodiments are illustrated. In the figures, the thicknesses of lines, layers or regions may be exaggerated for clarity. Optional components are illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Future mobile communication system, e.g. 5^{th}-generation (5G) mobile communication systems are likely to provide a connectionless bearer service to efficiently support applications yielding small data transmission traffic patterns and to allow for very low delay applications where setup delays for connections are not acceptable.

For many use cases of connectionless bearer services, it can be assumed that the network has to support applications in which a mobile terminal initiates a transaction (uplink transmission) by sending a first packet (e.g. a request or a report) towards the network representing the root of a virtual tree, which might be followed by a second packet (e.g. a response or a acknowledgement) in the other direction (i.e. downlink) from network towards terminal. By means of the first packet nodes on the path from terminal towards network (i.e. root of the tree) may learn how to forward backwards second packets arriving from the network in response to the first packet towards the cell (leave of the tree) a terminal is camping on. This forwarding information is often stored in a forwarding information base or switching table. As such transaction pattern are typical for most of the applications in the area of MTC (Machine Type Communication) the solution may have a broad applicability and may in this context be highly efficient, both in terms of signaling and energy efficiency.

However for applications where communication might be initiated by the network, not always valid forwarding information might be available. This situation occurs e.g. if nodes invalidate forwarding information after a certain time to ensure that it does not point to an obsolete link. Also forwarding information might be invalidated by a node getting an error indication that a packet forwarded on a link in accordance with the information could not be delivered; e.g. the terminal may have moved to another cell.

In conventional connectionless bearer services, in case of invalid forwarding information data packets may be forwarded on all downstream links in a kind of broadcast. This approach may not always be acceptable for two reasons:
1) A virtual access network might be configured such that it covers a large area and therefore the number of cells becomes quite high (several hundreds or thousands). The load and overhead by broadcasts in a very high number of cells will be likely inacceptable.
2) As a terminal does not know, when it has to expect such a transmission, it has to keep its receiver always on not to miss any packet. In other words it might not apply DRX (discontinuous reception). So it might not enter sleep modes resulting in high power consumption by the terminals.

Therefore a technical solution for efficient mobility support for connectionless bearer services may be required, allowing to use connectionless bearer services efficiently also for scenarios where communication might be network initiated.

The mobility management solutions for connection oriented bearer services might not be directly applicable as we outline further down. The mobility management solution for current connection oriented services may consist of two mechanisms:
1) Connected Mode Mobility or Handover, applicable when a terminal has a signaling connection (Radio Resource Control (RRC) Connected) with the network: Assisted by terminal measurements, the network may direct a terminal towards proper cells and update the connected bearer paths accordingly. Downlink data is forwarded over the connected bearer path.
2) Idle Mode Mobility, applicable when a terminal does not have a signaling connection (RRC Idle):
   Terminals autonomously select a proper cell to camp on. The network may not know on which base station transceiver a terminal is camping. However it might narrow down the potential cells down to registration areas (e.g. depending on technology tracking, routing or location areas) comprising a reasonably small set of cells. If data for a terminal arrives for such an RRC Idle terminal at the Serving Gateway (S-GW), the mobile network may page the terminal within the cells of the terminals registration area. As these paging may occurs at well-defined occasions the terminal may apply DRX (Discontinuous Reception) saving energy. A terminal receiving a paging message may then establish a RRC connection becoming RRC Connected and request (e.g. using a Service Request in 4G) the mobile network establishing/reestablishing the connected bearer path (radio link and tunnels). This connected bearer path then can be used to forward data to the terminal.

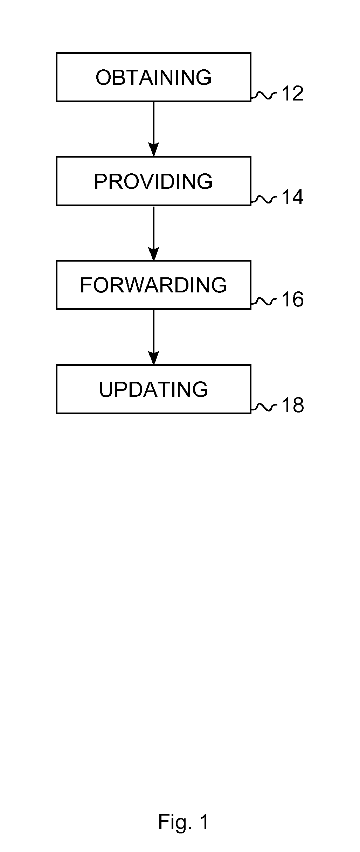

This solution for conventional connection oriented bearer services might not be applicable for several reasons:
- Paging Trigger Condition: For Connection Oriented Bearers, e.g. in Long Term Evolution (LTE, 4G) networks, the trigger for a General Packet Radio Service (GPRS) Tunneling Protocol Core (GTP-C) Message Downlink Data Notification towards the Mobility Management Entity is clearly defined. There is no user plane connection established while data is arriving. For a connectionless paradigm, there may not be a concept like this, just the vague description of "invalid forwarding information".
- Means to update connectionless bearer forwarding information may be non-existent. The connection oriented mechanisms might not allow for this.
- Action to be performed by a User Equipment (UE, also mobile transceiver (e.g. mobile transceiver 200 as introduced in the description of Fig. 1) or terminal) if a paging request is received: For conventional 4G paging, the required actions for a terminal receiving a paging request is clear. If the paging Id corresponds to the identity of a UE it shall perform a service request resulting in the establishment of signaling and user plane connections. For connectionless paradigms, at least for terminals able to use connectionless and connectionless services, there may be information on what is requested by the terminal - a service request or sending a user plane path update.
- If an Evolved Packet System (EPS) bearer service may be transported either on a connectionless or connection oriented bearer service i.e. over a hybrid bearer service, conventional connection oriented solutions might not allow a request for paging (e.g. by Downlink Data Notification) to differentiate whether the paging is required for a connectionless path update or to trigger the establishment of connectionless bearer. Note: Hybrid bearer service might be not applicable if e.g. terminals might only be capable to use connectionless services, the network might not offer hybrid or connection oriented bearer services, the communication scenario might not be supported by connection oriented service (e.g. in-access networking allowing mobile network internal communication or L2 level communication services).

The basic idea of at least some embodiments is to build on the mobility management functionality used for idle mode connection oriented bearer services. This means the network may keep track of a terminal's location in terms of registration or tracking areas. Also a paging in all the cells of the UEs registration area may be applicable (as today different paging strategies might be applied). In contrast to the connection oriented approach, the paging might not trigger the terminal to request always the establishment of a connected bearer path. For this the paging messages might contain a field allowing a terminal to distinguish whether it is requested to initiate a connection oriented bearer service or whether it is requested to send a forwarding control packet path update. Conventional paging requests do not comprise such a field (3^{rd} Generation Partnership Project (3GPP) TS36.331). Alternatively and equivalent rather than to introduce the cause field, embodiments may introduce a new paging message, e.g. Paging ConnLess, in the standard as extension to (3GPP TS36.331).

So in summary in contrast to conventional mobile communication systems, embodiments may provide a paging message containing in addition to the UE identifier used for paging, decision information (e.g. a specific field or cause "switch to connection") whether a terminal shall request the setup of connection oriented bearers or just trigger the update of the forwarding entries by a special message.

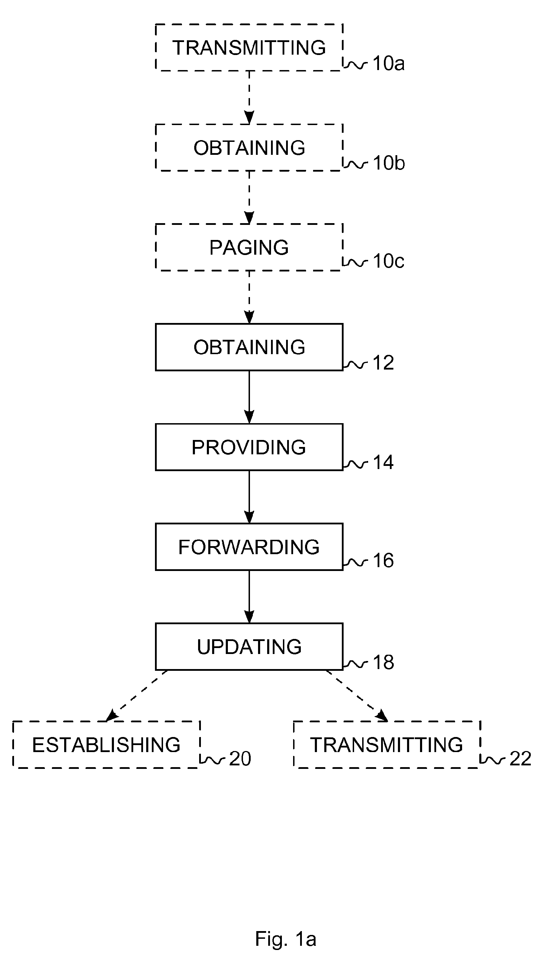

A terminal receiving a paging instructing it to update the forwarding entries may send an uplink packet. As in general, the terminal might not have data to be sent when receiving a paging, such a packet may be a dummy or a special ConnectionLess Tunneling Protocol (CLTP) control packet Path Update, which may be forwarded along the tree towards the root and may thus update or refresh the forwarding information in the network nodes it passes. Fig. 2 illustrates an embodiment of user plane control messaging for a connectionless service. A CLTP packet may comprise header data 2002 and further data, e.g. payload data 2004 or control data 2006. The header 2002 may comprise a "type" field, in addition to a destination field, a source field, and a virtual access network ID (vACC-ID) field. In the exemplary implementation, the route and the updated route may be specified as a virtual access network, which spans the infrastructure entities a packet has to traverse between a gateway to other networks, e.g. the internet, and the mobile transceiver. The vACC-ID may be used to identify the virtual access network. The virtual access network may e.g. be implemented using Virtual Local Area Network (VLAN) tags. For the message Path Update the type might be set to "path update" and it might carry additional information, e.g. a validity duration. For the control message Path Error, the type field might be set to "path error". Additionally, the Path Error message might comprise a location at which the error occurred, or it might comprise the packet which could not be delivered, e.g. in the control data 2006.

In various embodiments, the network nodes along the user plane path of the connectionless bearer may inform the mobility management about what kind of paging is needed. Conventionally, the paging may be triggered by a GTP-c (3GPP TS29-274) Downlink Data Notification message from S-GW towards MME saying that data for a certain bearer is available. In various embodiments, infrastructure entities of the mobile communication system might inform the mobility management whether the setup of a connection oriented bearer service is desirable or not. In an exemplary implementation, a paging request message may comprise (additional) information fields or causes in such a message (e.g. "switch to connection") or embodiments may use a new message Paging Request specifically for connectionless bearer services carrying as parameters a cause "path update needed" or "switch to connection". The terminal to be paged might identified by the UE specific connection between mobility management and gateway.

In at least some embodiments, any infrastructure entity in the data path of a connectionless bearer might trigger a paging. Any node might have an interface to the mobility management entity, or the node terminating the connectionless bearer (the S-GW in 4G) may have a direct interface to the mobility management entity and the other nodes may trigger this node to request a paging by means of an CLTP control message "Path Error". In various embodiments, the terminal may send the Path Update message in response to the paging and carry as source address the access address of the UE. Using this address in the packet, the infrastructure entities may adapt a forwarding of packets in the reverse direction towards the terminal.

In case paging is used for updating the connectionless bearer service forwarding entries, at least some embodiments may inform the mobility management about the success of a paging. Embodiments may provide a message on an interface between user plane infrastructure entities and the mobility management, e.g. a Path Updated message in extension of GTP-C of 4G.

Fig. 1 illustrates a flow chart of an embodiment of a method for updating forwarding information within a subset of a plurality of infrastructure entities 100 of a mobile communication system 300. The forwarding information indicates a route for user data traversing the subset of infrastructure entities to the mobile transceiver 200.

In various embodiments, the plurality of infrastructure entities 100 may comprise at least one element of the group of base station transceiver, serving gateway, packet gateway, mobility management entity and radio access network user plane anchor. In at least some embodiments, the forwarding information may correspond to information related to a subsequent hop (infrastructure entity), to which the user data is to be forwarded to reach the mobile transceiver 200. The forwarding information may e.g. correspond to a network port, gateway or route to use to forward the user data. In at least some embodiments, the mobile communication system 300 may correspond to a 5^{th}-generation mobile communication system, e.g. a successor or extension to a Long Term Evolution (LTE) or LTE Advanced (LTE-A) mobile communication system. The mobile transceiver 200 may e.g. correspond to a user equipment of the mobile communication system 300, e.g. a mobile phone, a smart phone, a wireless internet modem, a sensor node etc.

The method comprises obtaining 12 a paging request for the mobile transceiver 200. A paging request may e.g. correspond to a control packet sent to determine a location/associated base station transceiver of the mobile transceiver 200 in the mobile communication system. In at least some embodiments, an infrastructure entity of the plurality of infrastructure entities 100 may trigger the paging request, which may be sent to at least one base station transceiver providing the paging request to mobile transceivers, e.g. via a control channel.

The method further comprises providing 14 information on a location for the mobile transceiver 200 based on the paging request. In at least some embodiments, the information on the location may correspond to or be based on an association request of the mobile transceiver 200 to a base station transceiver having transmitted the paging request. The information on the location may e.g. be based on the association request, and may correspond to a control message sent by a base station transceiver, e.g. comprised in the plurality of infrastructure entities 100, based on an association request of the mobile transceiver 200. In at least some embodiments, the information on the location may comprise a location, e.g. a sub-net, of the mobile transceiver 200, and may be based on a base station transceiver associated with the mobile transceiver 200, e.g. may comprise an identifier of the base station transceiver. In various embodiments, the information on the location may be modified or processed by an infrastructure entity before forwarding.

The method further comprises forwarding 16 the information on the location to the plurality of infrastructure entities 100 along an updated route. In at least some embodiments, the forwarding 16 corresponds to transmitting the information on the location towards a root or exit node of the mobile communication system, e.g. a gateway to the internet, other parts of the mobile communication system or other mobile communication systems. In at least some embodiments, the subset of infrastructure entities may comprise a routing hierarchy. An infrastructure entity of the subset of infrastructure entities comprising an interface to other communication systems may corresponds to the top of the routing hierarchy. The forwarding 16 may correspond to forwarding the information on the location along the hierarchy towards the top of the hierarchy. In various embodiments, the forwarding 16 may correspond to forwarding the information on the location along the hierarchy, e.g. until reaching an infrastructure entity, after which the same route is chosen for all packets. In some embodiments, the forwarding may be limited to forwarding to a Serving GateWay (S-GW) or forwarding to a Packet-GateWay (P-GW) of the mobile communication system 300. In at least some embodiments, the mobile communication system 300 comprises downlink communication in an downlink direction, from a gateway or interface of the mobile communication system 300 to other mobile communication systems to the mobile transceiver 200, and uplink communication in an uplink direction from the mobile transceiver 200 to the gateway or interface. The forwarding 16 may e.g. correspond to a transmission of the information on the location in the uplink direction.

The method further comprises updating 18 the forwarding information within the subset of infrastructure entities according to the updated route. In various embodiments, the updating 18 may comprise or correspond to updating entries in a forwarding table. The forwarding table may e.g. comprise a plurality of forwarding entries for a plurality of mobile transceivers. A forwarding entry may e.g. correspond to information related to a route, network port or gateway to transmit user data for a mobile transceiver on, e.g. in a downlink direction. In at least some embodiments, the forwarding information may further comprise information related to a tag for the user data to distinguish user data related to different mobile transceiver, e.g. to enable establishing a user data tunnel or virtual connection.

In at least some embodiments, the paging request may comprise decision information on whether the mobile transceiver 200 is to update the path information or to establish a connection. In various embodiments, the paging request may comprise a bit vector comprising control information. In various embodiments, the bit vector may comprise at least one bit comprising the decision information. For example, the decision information may correspond to 1 bit, with 0 corresponding to "update path information" and 1 to "establish connection", or vice versa. Alternatively, the decision information may correspond to two or more bits, e.g. to increase a hamming distance or enable recovery of flipped bits.

Fig. 1a illustrates a flow chart of an extended embodiment of the method. The method may further comprise establishing 20 a connection along the updated route if the decision information indicates that a connection is to be established. In at least some embodiments, the establishing 20 may comprise the forwarding 16 the information on the location. For example, establishing 20 may correspond to sending a connection establishment request to an infrastructure entity of the plurality of infrastructure entities 100, e.g. to a mobility management entity or module of the mobile communication system. The connection establishment request may e.g. comprise the information on the location. The infrastructure entity may be configured to establish the connection, e.g. between a S-GW or user plane anchor and the mobile transceiver 200 and the S-GW or the user plane anchor and the P-GW or corresponding entities of a 5^{th} generation mobile communication system. During the establishment of the connection, the infrastructure entities may forward the information on the location, and the infrastructure entities may update the forwarding information based on the information on the location. In various embodiments, the mobile transceiver 200 may request to establish a connection only if the decision information is present and indicated that a connection establishment is required, and to only forward the information on the location if the decision information indicates that no connection establishment is required.

In various embodiments, the method may further comprise transmitting 10a user data along the route to the mobile transceiver 200. The user data may e.g. correspond to user data sent from an entity, e.g. a web server or application server, exterior to the mobile communication system 300 to the mobile transceiver 200. The method may further comprise obtaining 10b information related to a path error based on the transmitting 10a. If the transmission fails, e.g. because no valid forwarding information is available at an infrastructure entity of the route, or because the mobile transceiver 200 is currently not actively associated with the base station transceiver indicated by the forwarding information, the path error may occur, indicating that the transmission has succeeded and paging may be necessary. The information related to the path error may e.g. indicate an absence of valid forwarding information at an infrastructure entity of the subset of infrastructure entities. The method may further comprise paging 10c the mobile transceiver 200 based on the information related to the path error, wherein the paging request is based on the paging 10c. In various embodiments, the paging 10c may be triggered by an infrastructure entity of the subset of infrastructure entities. For example, an infrastructure entity receiving or generating the path error may request the mobility management entity (or a mobility management unit of a 5G mobile communication system) to perform paging for the mobile transceiver 200, or the infrastructure entity may request the paging itself, e.g. by providing a the paging request to at least one base station transceiver of the mobile communication system 300. The paging 10c may be based on the route for the user data. For example, the infrastructure entity or the mobility management entity may provide the paging request to base station transceivers based on the route, e.g. based on a registration area of a base station transceiver the mobile transceiver 200 has last been associated with. For example, the paging request may be sent to base station transceivers in an area around the base station transceiver last associated with the mobile transceiver 200. In various embodiments, the method may further comprise transmitting 22 the user data along the updated route to the mobile transceiver 200, e.g. if the user data has been temporarily stored in a buffer.

In various embodiments, the method may further comprise providing the information on the location to a mobility management entity (or a corresponding entity of the 5G mobile communication system). The mobility management entity may e.g. be configured to perform a subsequent paging based on the information on the location, or may be configured to provide the information on the location when requested, e.g. for tracking of a mobile transceiver.

In general, the mobile communication system 300 may, for example, correspond to one of the Third Generation Partnership Project (3GPP)-standardized mobile communication networks, where the term mobile communication system is used synonymously to mobile communication network. The mobile or wireless communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers, e.g. the mobile transceiver 200, and one or more base station transceivers, which may e.g. be comprised in the plurality of infrastructure entities 100, wherein the base station transceivers may establish macro cells or small cells, as e.g. pico-, metro-, or femto cells. A mobile transceiver may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

A mobile transceiver, e.g. the mobile transceiver 200, can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

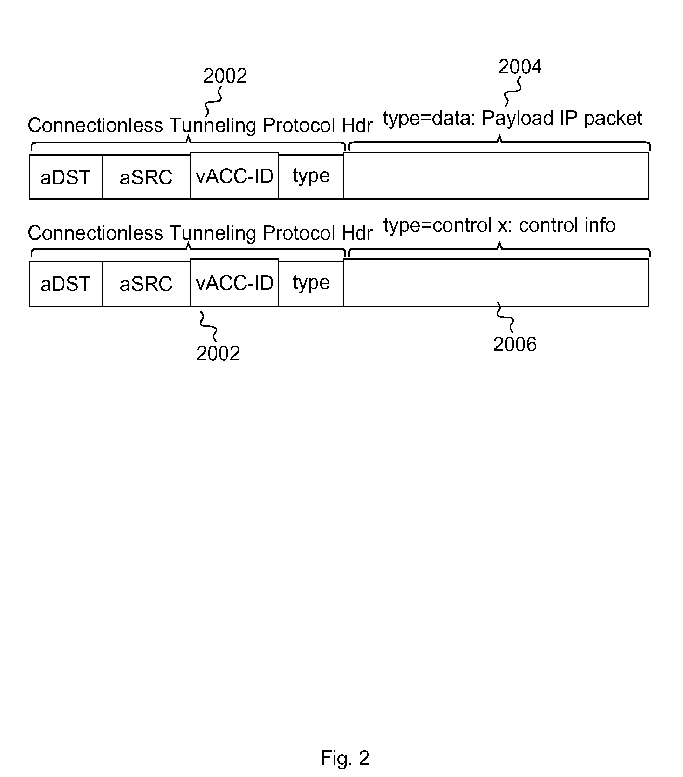

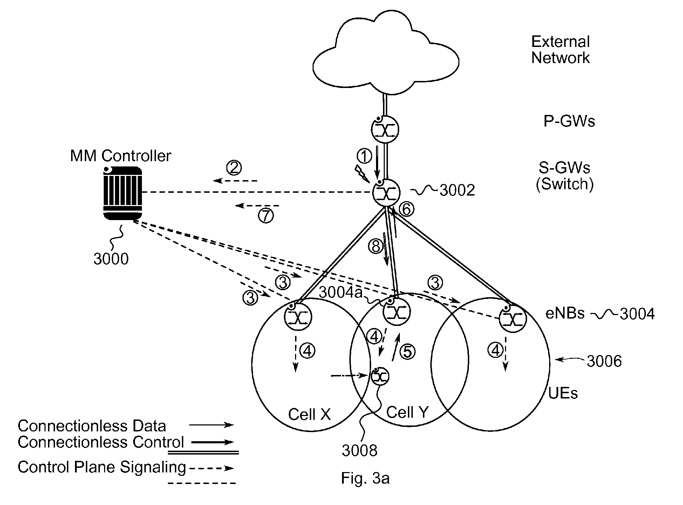

Fig. 3a shows an exemplary sequence of actions of embodiments to reestablish valid forwarding entries triggered by a S-GW 3002 (which may maintain a connection to Mobility Management (MM) 3000) for a connectionless bearer:
1. Downlink packet arrives at S-GW 3002. No valid forwarding information available
2. Request Paging (cause: path update needed) via the mobility management controller 3000
3. Paging request (cause: path update) to base stations 3004 (e.g. enhanced Node Bs, eNBs) in registration area.
4. Paging (cause: path update) in cells 3006 belonging to registration area
5. Path Update message sent by User Equipment (UE) 3008 and received by eNB 3004a (eNB forwarding info updated)
6. Path Update message received by S-GW 3002 (S-GW forwarding info updated)
7. Stop paging, send Path Updated message
8. Optional: Deliver downlink packet

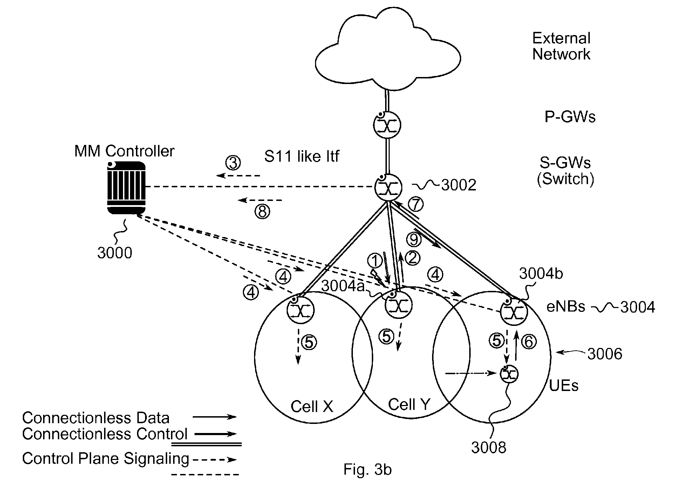

Fig. 3b illustrates a sequence of actions of embodiments triggered by a downstream node not directly connected to MM 3000 to reestablish valid forwarding entries for a connectionless bearer:
1. Downlink packet arrives at e.g. eNB 3004a. No valid forwarding information available (e.g. detected by missing Acknowledgement package (Ack) by UE)
2. Inform higher node, e.g. S-GW 3002 of Path Error
3. Request Paging (cause: path update needed) via the mobility management controller 3000
4. Paging Request (cause: path update) to base stations 3004 in registration area (eNBs)
5. Paging (cause: path update) in cells 3006 belonging to registration area
6. Path Update message sent by UE 3008 and received by eNB 3004b (eNB forwarding info updated)
7. Path Update message received by S-GW 3002 (S-GW forwarding info updated)
8. Stop paging, send Path Updated message
9. Optional: Deliver downlink packet if it has been stored, or, if the downlink packet has been sent back as payload within the Path Error message of step 2, the S-GW might forward the packet again on the updated path.

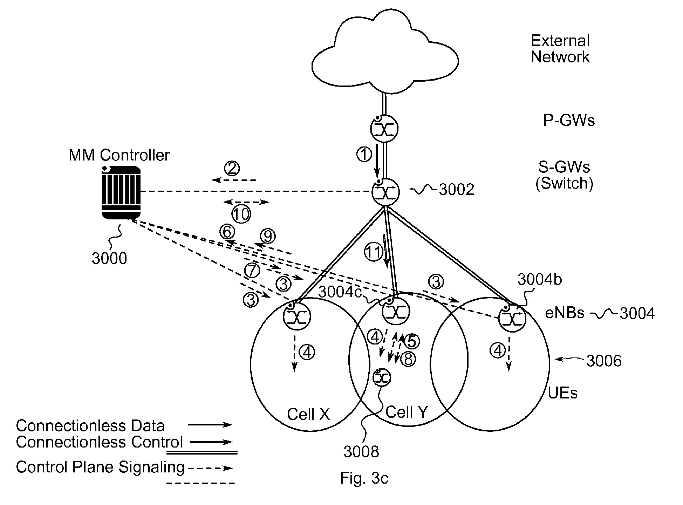

Fig. 3c illustrates a sequence of actions of embodiments applicable for Hybrid Bearers, where the network (e.g. the S-GW 3002) decides (e.g. based on traffic exceeds certain threshold) to set up connection oriented bearers:
1. Downlink packet arrives at S-GW 3002. Decision e.g. based on amount of just received downlink packets to trigger setup of connection oriented bearers
2. Request Paging (cause: 'switch to connection') or downlink data notification via mobility management controller 3000
3. Paging request (cause: connection setup) from mobility management controller 3000 to base stations 3004 (eNBs) in registration area
4. Paging (cause: connection setup) in cells 3006 belonging to registration area
5. Setup of RRC Connection UE 3008 - eNB 3004c with Non-Access Stratum (NAS) Service Request
6. Service Request to mobility management controller 3006
7. Initial Context Setup Request from mobility management controller 3006 to eNB 3004c
8. RRC Connection Reconfiguration between eNB 3004c and UE 3008
9. Initial Context Setup Response from eNB 3004c to mobility management controller 3000
10. Modify Bearer initiated by mobility management controller 3000 at S-GW 3002
11. Further packets are now forwarded on connection oriented bearer (or if packet from step 1 has been stored rather than been forwarded it might be forwarded on the connection oriented bearer)

In at least some embodiments, the plurality of infrastructure entities may comprise the mobility management controller 3000, the S-GW 3002, and/or the eNBs 3004. The UE 3008 may correspond to the mobile transceiver 200.

In various embodiments, the mobility management controller 3000 may correspond to an entity of the mobile communication system 300 configured to manage or administer a mobility of mobile transceivers in the mobile communication system 300. It may e.g. correspond to an entity of a 5G mobile communication system corresponding to a mobility management entity of an LTE or LTE-A mobile communication system.

In at least some embodiments, the S-GW 3002 may correspond to a gateway of the mobile communication system configured to forward user data from a gateway to other communication systems to a base station transceiver associated with the mobile transceiver 200. It may e.g. correspond to an entity of a 5G mobile communication system corresponding to a serving gateway of an LTE or LTE-A mobile communication system or to an user plane anchor of a 5G mobile communication system.

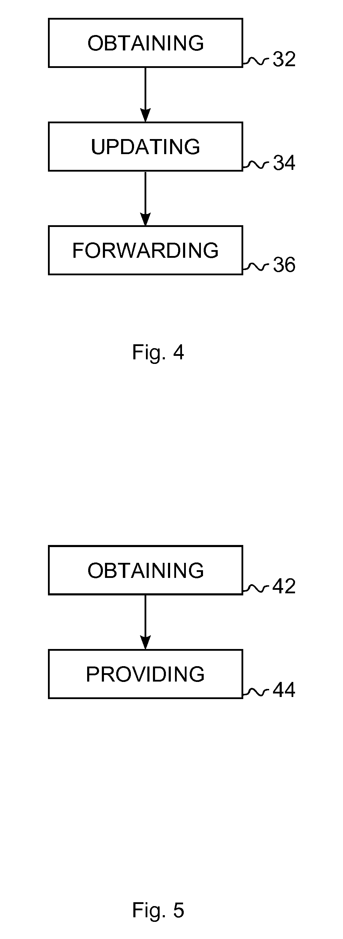

Fig. 4 illustrates a flow chart of an embodiment of a method for updating forwarding information for a mobile transceiver 200 in an infrastructure entity 100a of a plurality of infrastructure entities 100 of a mobile communication system 300.

The method comprises obtaining 32 information on a location of the mobile transceiver 200. The information on the location of the mobile transceiver 200 is based on a paging request for the mobile transceiver 200. The method further comprises updating 34 the forwarding information for the mobile transceiver 200 based on the information on the location of the mobile transceiver 200. The method further comprises forwarding 36 the information on the location.

In at least some embodiments, the obtaining 32 may be based on the providing 14 of Fig. 1. In at least some embodiments, the obtaining 32 may correspond to receiving the information on the location from the mobile transceiver 200, e.g. via another infrastructure entity of the plurality of infrastructure entities 100. The updating 34 may correspond to the updating 18 of Fig. 1, and/or the forwarding 36 may correspond to the forwarding 16 of Fig. 1.

In various embodiments, the plurality of infrastructure entities 100 may comprise a routing hierarchy. An infrastructure entity of the plurality of infrastructure entities may comprise an interface to other communication systems corresponding to the top of the routing hierarchy. The forwarding 36 may correspond to forwarding the information on the location along the hierarchy towards the top of the hierarchy. The updating 34 may be based on an infrastructure entity of the plurality of infrastructure entities lower in the routing hierarchy, from which the information on the location is obtained 32. In various embodiments, the updating 34 may be based on a network port or route over which the information on the location has been obtained 32, e.g. the infrastructure entity 100a may be configured to update a forwarding table based on the network port or route over which the information on the location has been obtained.

In at least some embodiments, if two or more infrastructure entities redundantly perform the same function in the mobile communication system, e.g. due to load balancing or failover, the method may further comprise distributing the updated information among the two or more infrastructure entities redundantly performing the same function, or forwarding the information on the location to the two or more infrastructure entities redundantly performing the same function.

More details and aspects of the method (e.g. plurality of infrastructure entities 100, mobile transceiver 200, mobile communication system 300, information on a location, paging request, routing hierarchy) are mentioned in connection with the proposed concept or one or more examples described above (e.g. Fig. 1 to 3). The method may comprise one or more additional optional features corresponding to one or more aspects of the proposed concept or one or more examples described above or below.

Fig. 5 illustrates a flow chart of an embodiment of a method for a mobile transceiver 200 in a mobile communication system 300. The mobile communication system 300 further comprises a plurality of infrastructure entities 100. The method comprises obtaining 42 a paging request for the mobile transceiver 200. The paging request comprises decision information on whether the mobile transceiver 200 is to update the path information or to establish a connection. The method further comprises providing 44 information on a location of the mobile transceiver 200 based on the paging request. The information related to the location corresponds to an association request of the mobile transceiver 200 to a base station transceiver comprised in the plurality of infrastructure nodes 100. The location of the mobile transceiver is based on the base station transceiver, e.g. an identifier of the base station transceiver, or may comprise a location of the mobile base station transceiver.

In various embodiments the method may further comprise establishing 46 a connection via at least a subset of the plurality of infrastructure nodes 100 if the decision information indicates that a connection is to be established. In at least some embodiments, the obtaining 42 may correspond to obtaining 12 of Fig 1. The 44 may e.g. correspond to providing 14 of Fig. 1. The establishing 46 may e.g. correspond to establishing 20 of Fig. 1a.

More details and aspects of the method (e.g. plurality of infrastructure entities 100, mobile transceiver 200, mobile communication system 300, information on a location, paging request, routing hierarchy, decision information) are mentioned in connection with the proposed concept or one or more examples described above (e.g. Fig. 1 to 4). The method may comprise one or more additional optional features corresponding to one or more aspects of the proposed concept or one or more examples described above or below.

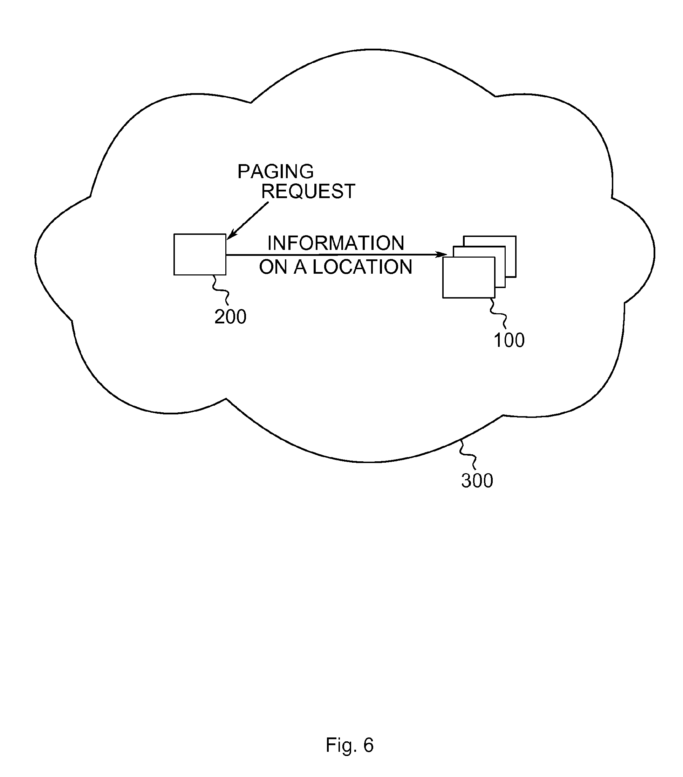

Fig. 6 illustrates a block diagram of an embodiment of a mobile communication system 300. The mobile communication system 300 comprises a plurality of infrastructure entities 100 and a mobile transceiver 200. The mobile transceiver 200 is configured to obtain a paging request for the mobile transceiver 200 and to provide information on a location for the mobile transceiver 200 based on the paging request. The plurality of infrastructure entities 100 is configured to forward the information on the location within the plurality of infrastructure entities 100 along an updated route and to update the forwarding information within a subset of infrastructure entities according to the updated route. The forwarding information indicates a route for user data traversing the subset of infrastructure entities to the mobile transceiver 200.

More details and aspects of the mobile communication system 300 (e.g. plurality of infrastructure entities 100, mobile transceiver 200, mobile communication system 300, information on a location, paging request, routing hierarchy) are mentioned in connection with the proposed concept or one or more examples described above (e.g. Fig. 1 to 5). The mobile communication system 300 may comprise one or more additional optional features corresponding to one or more aspects of the proposed concept or one or more examples described above or below.

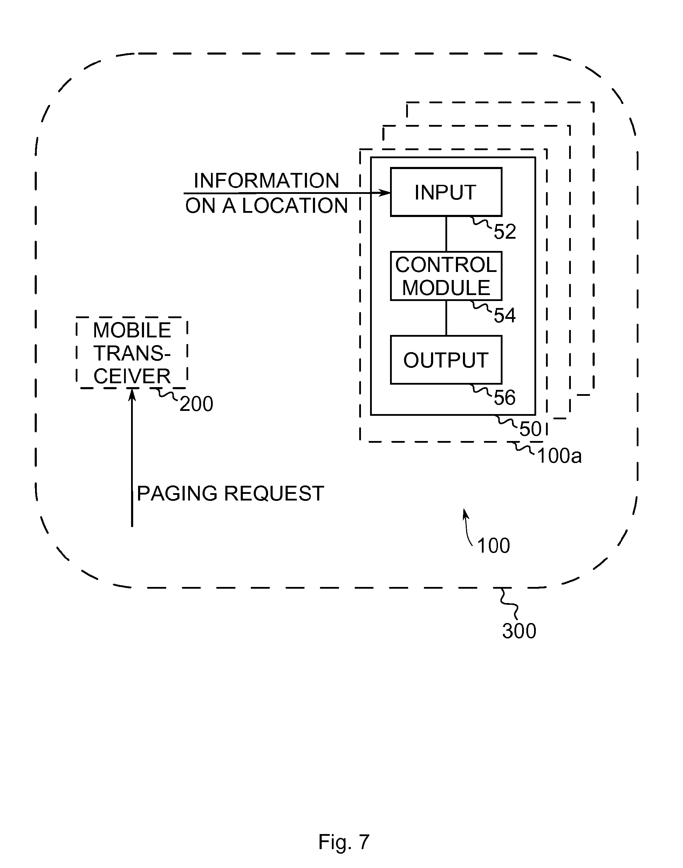

Fig. 7 illustrates a block diagram of an embodiment of apparatus 50 for updating forwarding information for a mobile transceiver 200 in an infrastructure entity 100a of a plurality of infrastructure entities 100 of a mobile communication system 300. The apparatus 50 comprises an input 52 configured to obtain information on a location of the mobile transceiver 200, wherein the information on the location of the mobile transceiver 200 is based on a paging request for the mobile transceiver 200. The apparatus 50 further comprises a control module 54 configured to update the forwarding information for the mobile transceiver 200 based on the information on the location of the mobile transceiver 200. The apparatus 50 further comprises an output 56 configured to forward the information on the location.

An input, e.g. the input 52 or an input 62 as introduced subsequently, may correspond to an interface for receiving information, which may be in digital (bit) values according to a specified code, within a module, between modules or between modules of different entities. An output, e.g. the output 56 or an output 66 as introduced subsequently, may correspond to an interface for transmitting information, which may be represented by digital (bit) values according to a specified code or protocol, within a module, between modules, or between modules of different entities. In embodiments the control module 54 and/or a control module 64 as will be introduced subsequently may be implemented using one or more processing units, one or more processing devices, any means for processing, such as a processor, a computer or a programmable hardware component being operable with accordingly adapted software. In other words, the described function of the control module 54 and/or 64 may as well be implemented in software, which is then executed on one or more programmable hardware components. Such hardware components may comprise a general purpose processor, a Digital Signal Processor (DSP), a micro-controller, etc. The control module 54 is coupled to the input 52 and the output 56.

More details and aspects of the apparatus 50 (e.g. plurality of infrastructure entities 100, mobile transceiver 200, mobile communication system 300, information on a location, paging request, routing hierarchy) are mentioned in connection with the proposed concept or one or more examples described above (e.g. Fig. 1 to 6). The apparatus 50 may comprise one or more additional optional features corresponding to one or more aspects of the proposed concept or one or more examples described above or below.

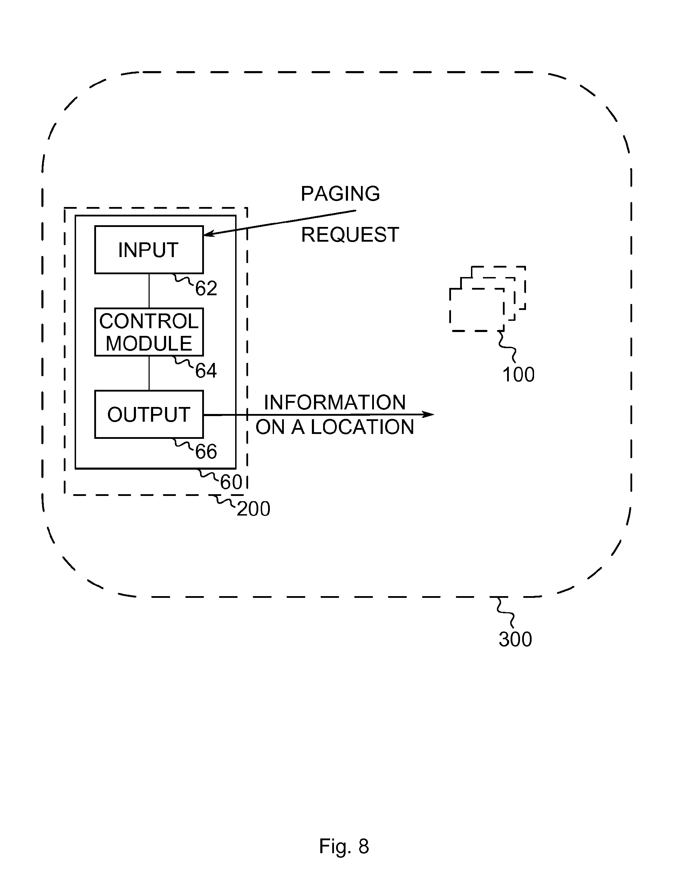

Fig. 8 illustrates a block diagram of an embodiment of an apparatus 60 for a mobile transceiver 200 in a mobile communication system 300. The mobile communication system 300 further comprises a plurality of infrastructure entities 100. The apparatus 60 comprises an input 62 configured to obtain a paging request for the mobile transceiver 200. The paging request comprises decision information on whether the mobile transceiver 200 is to update the path information or to establish a connection. The apparatus 60 further comprises a control module 64 configured to provide information on a location of the mobile transceiver 200 via an output 66 based on the paging request. The information related to the location corresponds to an association request of the mobile transceiver 200 to a base station transceiver comprised in the plurality of infrastructure nodes 100. The location of the mobile transceiver is based on the base station transceiver. The control module 64 is coupled to the input 62 and the output 66.

More details and aspects of the apparatus 60 (e.g. plurality of infrastructure entities 100, mobile transceiver 200, mobile communication system 300, information on a location, paging request, routing hierarchy) are mentioned in connection with the proposed concept or one or more examples described above (e.g. Fig. 1 to 7). The apparatus 60 may comprise one or more additional optional features corresponding to one or more aspects of the proposed concept or one or more examples described above or below.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are ma-chine or computer readable and encode machine-executable or computer-executable pro-grams of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

Embodiments may enable connectionless services by ensuring its general applicability. Embodiments may allow no longer restricting the connectionless data transfers to use cases of small data transfers initiated by the mobile transceiver. Embodiments may allow to leverage the advantages of connectionless bearer services, e.g. to use the energy efficiency and signaling efficiency on terminal and network side by magnitudes for applications causing traffic patterns beyond terminal initiated small data transfers. Embodiments may enable using connectionless bearer services for a wide range of applications. Therefore embodiments may be suited for traffic patterns more and more found e.g. in smartphone applications (Messaging, Notification Services etc.), which might not be well supported in 4G

Conventional solutions may require the terminals to always receive, whereas embodiments may allow for a duty cycling <1/1000, therefore reducing the power consumption by orders of magnitude. Also the air interface load may be decreased by orders of magnitude. Instead of broadcasting data packets in all cells of a country (e.g.100 000) paging with small paging info in a small (e.g. 100) set of cells may be supported.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. Method for updating forwarding information within a subset of a plurality of infrastructure entities (100) of a mobile communication system (300),
the forwarding information indicating a route for user data traversing the subset of infrastructure entities to the mobile transceiver (200), the method comprising:
obtaining (12) a paging request for the mobile transceiver (200);
providing (14) information on a location for the mobile transceiver (200) based on the paging request;
forwarding (16) the information on the location to the plurality of infrastructure entities (100) along an updated route; and
updating (18) the forwarding information within the subset of infrastructure entities according to the updated route.

2. The method of claim 1,
wherein the paging request comprises decision information on whether the mobile transceiver (200) is to update the path information or to establish a connection,
and wherein the method further comprises establishing (20) a connection along the updated route if the decision information indicates that a connection is to be established.

3. The method of claim 1, the method further comprising
transmitting (0a) user data along the route to the mobile transceiver (200);
obtaining (10b) information related to a path error based on the transmitting (10a); and paging (10c) the mobile transceiver (200) based on the information related to the path error, wherein the paging request is based on the paging (10c).

4. The method of claim 3, wherein the paging (10c) is triggered by an infrastructure entity of the subset of infrastructure entities,
and/or wherein the paging (10c) is based on the route for the user data.

5. The method of claim 3, wherein the information related to the path error indicates an absence of valid forwarding information at an infrastructure entity of the subset of infrastructure entities.

6. The method of claim 3 further comprising
transmitting (22) the user data along the updated route to the mobile transceiver (200).

7. The method of claim 1, wherein the subset of infrastructure entities comprises a routing hierarchy, wherein an infrastructure entity of the subset of infrastructure entities comprising an interface to other communication systems corresponds to the top of the routing hierarchy, wherein the forwarding (16) corresponds to forwarding the information on the location along the hierarchy towards the top of the hierarchy.

8. Method for updating forwarding information for a mobile transceiver (200) in an infrastructure entity (100a) of a plurality of infrastructure entities (100) of a mobile communication system (300), the method comprising
obtaining (32) information on a location of the mobile transceiver (200), wherein the information on the location of the mobile transceiver (200) is based on a paging request for the mobile transceiver (200);
updating (34) the forwarding information for the mobile transceiver (200) based on the information on the location of the mobile transceiver (200);
forwarding (36) the information on the location.

9. The method of claim 8, wherein the plurality of infrastructure entities (100) comprises
a routing hierarchy, wherein an infrastructure entity of the plurality of infrastructure entities comprising an interface to other communication systems corresponds to the top of the routing hierarchy,
wherein the forwarding (36) corresponds to forwarding the information on the location along the hierarchy towards the top of the hierarchy,
and/or wherein the updating (34) is based on an infrastructure entity of the plurality of infrastructure entities lower in the routing hierarchy, from which the information on the location is obtained (32).

10. Method for a mobile transceiver (200) in a mobile communication system (300), the mobile communication system (300) further comprising a plurality of infrastructure entities (100), the method comprising
obtaining (42) a paging request for the mobile transceiver (200), wherein the paging request comprises decision information on whether the mobile transceiver (200) is to update the path information or to establish a connection,
providing (44) information on a location of the mobile transceiver (200) based on the paging request, wherein the information related to the location corresponds to an association request of the mobile transceiver (200) to a base station transceiver comprised in the plurality of infrastructure nodes (100), wherein the location of the mobile transceiver (200) is based on the base station transceiver.

11. The method of claim 10 further comprising:
establishing (46) a connection via at least a subset of the plurality of infrastructure nodes (100) if the decision information indicates that a connection is to be established.

12. Mobile communication system (300), comprising
a plurality of infrastructure entities (100); and
a mobile transceiver (200),
wherein the mobile transceiver (200) is configured to obtain a paging request for the mobile transceiver (200) and to provide information on a location for the mobile transceiver (200) based on the paging request,
wherein the plurality of infrastructure entities (100) is configured to forward the information on the location within the plurality of infrastructure entities (100) along an updated route and to update the forwarding information within a subset of infrastructure entities according to the updated route,
wherein the forwarding information indicates a route for user data traversing the subset of infrastructure entities to the mobile transceiver (200).

13. Apparatus (50) for updating forwarding information for a mobile transceiver (200) in an infrastructure entity (100a) of a plurality of infrastructure entities (100) of a mobile communication system (300), the apparatus (50) comprising
an input (52) configured to obtain information on a location of the mobile transceiver (200), wherein the information on the location of the mobile transceiver (200) is based on a paging request for the mobile transceiver (200);
a control module (54) configured to update the forwarding information for the mobile transceiver (200) based on the information on the location of the mobile transceiver (200); and
an output (56) configured to forward the information on the location.

14. Apparatus (60) for a mobile transceiver (200) in a mobile communication system (300), the mobile communication system (300) further comprising a plurality of infrastructure entities (100), the apparatus (60) comprising
an input (62) configured to obtain a paging request for the mobile transceiver (200), wherein the paging request comprises decision information on whether the mobile transceiver (200) is to update the path information or to establish a connection,
a control module (64) configured to provide information on a location of the mobile transceiver (200) via an output (66) based on the paging request, wherein the information related to the location corresponds to an association request of the mobile transceiver (200) to a base station transceiver comprised in the plurality of infrastructure nodes (100), wherein the location of the mobile transceiver is based on the base station transceiver.

15. A computer program product comprising a computer readable medium having computer readable program code embodied therein, the computer readable program code being configured to implement any of the methods of claims 1 to 11, when being loaded on a computer, a processor, or a programmable hardware component.

## Amended claims

### Amended claims in accordance with Rule 137(2) EPC.

1. Method for updating forwarding information within a subset of a plurality of infrastructure entities (100) of a mobile communication system (300),
the forwarding information indicating a route for user data traversing the subset of infrastructure entities to the mobile transceiver (200), the method comprising:
transmitting (10a) user data along the route to the mobile transceiver (200);
obtaining (10b) information related to a path error based on the transmitting (10a);
paging (10c) the mobile transceiver (200) based on the information related to the path error;
obtaining (12) a paging request for the mobile transceiver (200), wherein the paging request is based on the paging (10c);
providing (14) information on a location for the mobile transceiver (200) based on the paging request;
forwarding (16) the information on the location to the plurality of infrastructure entities (100) along an updated route; and
updating (18) the forwarding information within the subset of infrastructure entities according to the updated route.

2. The method of claim 1,
wherein the paging request comprises decision information on whether the mobile transceiver (200) is to update the path information or to establish a connection,
and wherein the method further comprises establishing (20) a connection along the updated route if the decision information indicates that a connection is to be established.

3. The method of claim 1, wherein the paging (10c) is triggered by an infrastructure entity of the subset of infrastructure entities,
and/or wherein the paging (10c) is based on the route for the user data.

4. The method of claim 1, wherein the information related to the path error indicates an absence of valid forwarding information at an infrastructure entity of the subset of infrastructure entities.

5. The method of claim 1 further comprising
transmitting (22) the user data along the updated route to the mobile transceiver (200).

6. The method of claim 1, wherein the subset of infrastructure entities comprises a routing hierarchy, wherein an infrastructure entity of the subset of infrastructure entities comprising an interface to other communication systems corresponds to the top of the routing hierarchy, wherein the forwarding (16) corresponds to forwarding the information on the location along the hierarchy towards the top of the hierarchy.

7. Method for updating forwarding information for a mobile transceiver (200) in an infrastructure entity (100a) of a plurality of infrastructure entities (100) of a mobile communication system (300), the method comprising
transmitting (10a) user data along a route for user data traversing a subset of infrastructure entities of the plurality of infrastructure entities to the mobile transceiver (200);
obtaining (10b) information related to a path error based on the transmitting (10a);
paging (10c) the mobile transceiver (200) based on the information related to the path error, wherein the paging request is based on the paging (10c);
obtaining (32) information on a location of the mobile transceiver (200), wherein the information on the location of the mobile transceiver (200) is based on the paging request for the mobile transceiver (200) based on the paging (10c) of the mobile transceiver;
updating (34) the forwarding information for the mobile transceiver (200) based on the information on the location of the mobile transceiver (200);
forwarding (36) the information on the location.

8. The method of claim 7, wherein the plurality of infrastructure entities (100) comprises a routing hierarchy, wherein an infrastructure entity of the plurality of infrastructure entities comprising an interface to other communication systems corresponds to the top of the routing hierarchy,
wherein the forwarding (36) corresponds to forwarding the information on the location along the hierarchy towards the top of the hierarchy,
and/or wherein the updating (34) is based on an infrastructure entity of the plurality of infrastructure entities lower in the routing hierarchy, from which the information on the location is obtained (32).

9. Method for a mobile transceiver (200) in a mobile communication system (300), the mobile communication system (300) further comprising a plurality of infrastructure entities (100), the method comprising
obtaining (42) a paging request for the mobile transceiver (200), wherein the paging request comprises decision information on whether the mobile transceiver (200) is to update path information or to establish a connection, and wherein the paging request is based on a paging triggered by an infrastructure entity of the plurality of infrastructure entities based on information related to a path error based on a transmitting of user data along a route for user data traversing a subset of infrastructure entities of the plurality of infrastructure entities to the mobile transceiver to the mobile transceiver (200),
providing (44) information on a location of the mobile transceiver (200) based on the paging request, wherein the information related to the location corresponds to an association request of the mobile transceiver (200) to a base station transceiver comprised in the plurality of infrastructure nodes (100), wherein the location of the mobile transceiver (200) is based on the base station transceiver.

10. The method of claim 9 further comprising:
establishing (46) a connection via at least a subset of the plurality of infrastructure nodes (100) if the decision information indicates that a connection is to be established.

11. Mobile communication system (300), comprising
a plurality of infrastructure entities (100); and
a mobile transceiver (200),
wherein the plurality of infrastructure entities (100) is configured to transmit user data along a route to the mobile transceiver (200), obtain information related to a path error based on the transmitting of the user data, and to page the mobile transceiver (200) based on the information related to the path error,
wherein the mobile transceiver (200) is configured to obtain a paging request for the mobile transceiver (200) based on the paging triggered by an infrastructure entity of the plurality of infrastructure entities, and to provide information on a location for the mobile transceiver (200) based on the paging request,
wherein the plurality of infrastructure entities (100) is configured to forward the information on the location within the plurality of infrastructure entities (100) along an updated route and to update the forwarding information within a subset of infrastructure entities according to the updated route,
wherein the forwarding information indicates a route for user data traversing the subset of infrastructure entities to the mobile transceiver (200).

12. Apparatus (50) for updating forwarding information for a mobile transceiver (200) in an infrastructure entity (100a) of a plurality of infrastructure entities (100) of a mobile communication system (300), the apparatus (50) comprising
an input (52) configured to obtain information related to a path error based on a transmitting of user data along a route for user data traversing a subset of infrastructure entities of the plurality of infrastructure entities to the mobile transceiver (200) and to obtain information on a location of the mobile transceiver (200), wherein the information on the location of the mobile transceiver (200) is based on a paging request for the mobile transceiver (200);
a control module (54) configured to page the mobile transceiver (200) based on the information related to the path error, wherein the paging request is based on the paging and to update the forwarding information for the mobile transceiver (200) based on the information on the location of the mobile transceiver (200); and
an output (56) configured to forward the information on the location.

13. Apparatus (60) for a mobile transceiver (200) in a mobile communication system (300), the mobile communication system (300) further comprising a plurality of infrastructure entities (100), the apparatus (60) comprising
an input (62) configured to obtain a paging request for the mobile transceiver (200), wherein the paging request comprises decision information on whether the mobile transceiver (200) is to update path information or to establish a connection, and wherein the paging request is based on a paging triggered by an infrastructure entity of the plurality of infrastructure entities based on information related to a path error based on a transmitting of user data along a route for user data traversing a subset of infrastructure entities of the plurality of infrastructure entities to the mobile transceiver (200),
a control module (64) configured to provide information on a location of the mobile transceiver (200) via an output (66) based on the paging request, wherein the information related to the location corresponds to an association request of the mobile transceiver (200) to a base station transceiver comprised in the plurality of infrastructure nodes (100), wherein the location of the mobile transceiver is based on the base station transceiver.

14. A computer program product comprising a computer readable medium having computer readable program code embodied therein, the computer readable program code being configured to implement any of the methods of claims 1 to 10, when being loaded on a computer, a processor, or a programmable hardware component.
